# EUROPÄISCHE PATENTSCHRIFT

(11) **EP 1 531 330 B1**
(45) Veröffentlichungstag und Bekanntmachung des Hinweises auf die Patenterteilung: **07.01.2009**
(21) Anmeldenummer: 04026160.4
(22) Anmeldetag: 04.11.2004
(51) Int. Cl.: G01N 29/04, G01N 3/12, G01M 3/02, G01M 7/02

(54) **Verfahren und Vorrichtung zur Erfassung von Veränderungen oder Schädigungen an Druckbehältern während ihrer Druckprüfung**
Method and device for monitoring changes or damages of pressurised containers during pressure testing
Procédé et dispositif d'acquisition d'information concernant des changements ou des dégâts d'un récipient sous pression pendant un test de pression

(30) Priorität: 13.11.2003 DE 10353081
(43) Veröffentlichungstag der Anmeldung: 18.05.2005
(73) Patentinhaber: IST Ingenieurdienst für sichere Technik GmbH, 81249 München (DE)
(72) Erfinder: Schmitt-Thomas, Kh. G., Univ. Prof. Dr.-Ing., 80639 München (DE)
(74) Vertreter: Kramer - Barske - Schmidtchen

(56) Entgegenhaltungen:
- EP-A- 0 681 168
- US-A- 4 009 616
- US-A- 4 869 097
- US-A- 5 591 900
- US-B1- 6 339 960

## Beschreibung

Die Erfindung betrifft ein Verfahren, mit dem etwaige von Druckbehältern ausgehende Gefährdungen, die von einer Schädigung des Druckbehälters während der Druckprüfung herrühren, noch während der Durchführung der Druckprüfung erkannt werden können. Ebenfalls lassen sich Veränderungen des Behälters, d. h. Schädigungen, dann erkennen, wenn das Klangspektrum des Behälters vor der Prüfung mit dem Spektrum nach der Prüfung verglichen wird.

Sicherheitsvorschriften verlangen, dass Druckbehälter bestimmten einmaligen und wiederkehrenden Prüfungen vor Inbetriebnahme bzw. während der Dauer des Betriebes in bestimmten Zeitabständen unterworfen werden. Eine solche Prüfung, die an Druckbehältern bzw. Dampfkesseln durchzuführen ist, ist die sogenannte Wasserdruckprobe. Dabei wird der Druckbehälter während der Prüfung mit Überdruck beaufschlagt.

Es ist bekannt, dass beispielsweise während der Wasserdruckprobe oder anderer Prüfungen, bei denen Überdruck vorgeschrieben ist, Anrisse oder Verformungen am Druckbehälter entstehen können, die nicht unmittelbar als Schaden zu erkennen sind, sondern sich erst im späteren Betrieb zu erkennbaren Störungen bzw. Schadensfällen ausweiten. Daher werden Druckbehälter während der Druckprüfung bevorzugter Weise derart überwacht, dass eine Entstehung von nicht erkannten Fehlern verhindert wird.

### Stand der Technik

Als solches Überwachungsverfahren während der Druckprüfung ist die sogenannte Aufnahme der Schallemission (SE-Analyse) bekannt. Das Prinzip der Schallemission geht davon aus, dass Einwirkungen äußerer Kräfte auf den Werkstoff oder das Bauteil in Formänderungen oder Rissbildungen umgesetzt werden. Solche Formänderungen oder Rissbildungen bilden sich in der Schallemission charakteristisch ab und erzeugen entsprechend zuzuordnende Signale. Bei Verformungen sind dies kontinuierliche Emissionen, bei Rissbildung sogenannte Burstsignale. Allerdings ist bekannt, dass die Schallemissionsüberwachungen durch vielerlei Störeinflüsse beeinträchtigt sind, und somit oftmals Fehlinterpretationen auftreten. Beispielsweise erzeugen Setzgeräusche oder Reibgeräusche Störsignale, die eine sichere Aussage verhindern. Daher ist die Schallemissionsanalyse zur Überwachung des Druckbehälters während seiner Druckprüfung nur bedingt einsetzbar.

Aus der EP 0 636 881 B1 ist ein Verfahren zur Qualitätsprüfung von Bauteilen, insbesondere Keramikbauteilen, mittels Klangmessung bekannt. Insbesondere wird das Verfahren zur Qualitätsprüfung von Keramikbauteilen, wie z.B. Dachziegeln, eingesetzt. Zur Überprüfung wird das Bauteil mechanisch angeschlagen und zu einer akustischen Klangabstrahlung angeregt. Das erzeugte Klangspektrum wird aufgenommen und über einen vorbestimmten Frequenzbereich hinweg bezüglich der den Frequenzanteilen zugeordneten Amplituden mit Hilfe der FFT (Fast Fourier Transformation) analysiert und bewertet. Die Bewertung kann allgemein nach Lage und Höhe der einzelnen Frequenzen erfolgen. Im Fall der Auswertung nach EP 0 636 881 B1 werden z. B. die Amplituden des Amplitudenfrequenzspektrums summiert, die Amplitudensumme durch die Anzahl der zwischen den Peaks der Frequenzanteile in dem Amplitudenfrequenzspektrum vorhandenen Wendepunkte dividiert und der erhaltene Quotient als Bewertungszahl definiert.

Aus der US 6 339 960 B1 ist ein Verfahren zum Bestimmen des Innendrucks eines abgeschlossenen Behälters bekannt. Bei dem Verfahren wird ein Deckel des Behälters derart angeregt, dass zumindest zwei Vibrationsmodi erzeugt werden, die unterschiedliche Frequenzen aufweisen, wobei die Frequenzen eine Fundamentalfrequenz und eine zweite Frequenz sind. Die Vibration, die von dieser Anregung stammt, wird erfasst zum Bestimmen von zwei Frequenzen, F1 und F2. Die Frequenz F2 kann verwendet werden, einen Wert für den Innendruck zu bestimmen, wobei ein mathematisches Modell verwendet wird, das auf den Deckel des abgeschlossenen Behälters kalibriert ist. Unter Verwendung von F1 kann der Volumeninhalt berechnet werden.

Aus der US 4 869 097 ist ein Verfahren bekannt, um den Druck eines Gases innerhalb eines gedichteten Gefäßes zu bestimmen. Dazu wird ein Schallwandler verwendet, um eine oszillierende Kraft auf die Oberfläche des Gefäßes aufzubringen. Die Frequenz der Ultraschallwelle wird über einen Bereich geführt, in dem eine Resonanzvibration des Gases im Gefäß erzeugt wird. Ein Empfangswandler misst die Amplitude der resultierenden Vibration an der Gefäßoberfläche und ermittelt die Resonanzfrequenz des Gases als Spitzen. Die Resonanzfrequenz hängt von der Zusammensetzung des Gases, seinem Druck und der Temperatur und der Gestalt des das Gas umschließenden Gefäßes ab. Durch empirische Bestimmung kann daraus der Druck im Inneren des Gefäßes berechnet werden, wenn die Zusammensetzung des Gases, seine Temperatur und die Gestalt des Gefäßes bekannt sind.

Aus der EP 0 681 168 A2 ist ein Verfahren zum Bestimmen des Innendrucks eines geschlossenen Behälters bekannt, wobei ein Vibrationsmodus angeregt wird, und die erste Harmonische davon angeregt wird, und wobei mittels Erfassungsmitteln die Vibration bestimmt wird und der Innendruck unter Bezugnahme der bestimmten Frequenzen durch Analyse gewonnen wird.

### Darstellung der Erfindung

Die Aufgabe der Erfindung ist es, ein Überwachungsverfahren während der Druckprüfung von insbesondere Behältern und Rohren und eine entsprechende Vorrichtung zur Durchführung des Verfahrens vorzusehen, mit denen eine sichere Aussage über eine etwaige Beeinträchtigung des Druckbehälters während der Druckprüfung gewonnen werden kann.

Diese Aufgabe wird mit einem Verfahren mit den Merkmalen des Anspruchs 1 bzw. einer Vorrichtung mit den Merkmalen des Anspruchs 9 gelöst. Bevorzugte Ausführungsformen sind durch die abhängigen Ansprüche gekennzeichnet.

Der Erfindung liegt der Gedanke zugrunde, Klangprüfanlagen und Klangprüfverfahren vorzusehen, mit denen Druckbehälter während der Beaufschlagung mit Druck bei einer Druckprüfung überwacht werden. Eine Klangprüfung wird dabei durchgeführt, um etwaige Beeinträchtigungen des Druckbehälters während der Druckprüfung festzustellen. Dabei wird während der Überwachung der Druckprüfung das Klangspektrum an Hand verschiedener Kriterien ausgewertet, wobei beispielsweise die Peak-Höhen der einzelnen Frequenzen oder der Flankenanstieg berücksichtigt werden können. Dabei ist eine Auswertung z.B. durch Vergleich der während der Druckprüfung zu unterschiedlichen Zeitpunkten aufgenommenen Klangspektren, durch Vergleich eines solchen Klangspektrums mit einem im Voraus bekannten Spektrum, durch Vergleich zweier Spektren (vor und nach der Prüfung) oder durch Auswerten des Klangspektrums mittels anderer Kriterien, ähnlich zu dem in der EP 0 636 881 B1 beschriebenen Verfahren möglich. Außerdem können beispielsweise zwei an unterschiedlichen Orten an Behälter angeregte Klangspektren im Hinblick auf die Laufzeitunterschiede des Schalls zu einem gemeinsamen Aufnehmer hin ausgewertet werden und die Integrität des Druckbehälters dadurch beurteilt werden.

Das Prinzip der Bauteilüberwachung während ansteigenden Drucks beruht insbesondere darauf, dass ähnlich einer zunehmend gespannten Saite eines Instruments das Klangspektrum mit der Druckerhöhung des Behälters zu höheren Frequenzen verschoben wird. Bleibt das Spektrum zu zwei verschiedenen Zeitpunkten während der Druckprüfung im Wesentlichen im Hinblick auf Lage und Höhe der Amplituden sowie deren Anstieg und Abfall außer der erwähnten Verschiebung unverändert, so kann daraus geschlossen werden, dass der Behälter während der Druckprüfung nicht beschädigt wurde. Zusätzlich wird ausgenützt, dass das Bauteil bei der Prüfung im Allgemeinen mit einem flüssigen Medium, beispielsweise Wasser, gefüllt ist, wodurch die Schallübertragung erhöht wird. Dies führt zu einer verbesserten Messgenauigkeit. Nach der Beendigung der Druckprüfung können das Klangspektrum mittels einer FFT-Analyse ausgewertet werden und aus den aufgestellten Kriterien, beispielsweise der Lage der Frequenzen, der Höhe der Amplituden, den Formen der Frequenzspitzen, der Steilheit des Flankenanstiegs und/oder -abfalls oder auch der Verschiebung des Gesamtspektrums, Rückschlüsse auf Veränderungen am Bauteil gezogen werden. Zusätzlich ist nach Bedarf eine Analyse möglich, welcher Art diese Veränderungen sein können (Risse, Dehnungen, Verformungen u.ä.). Gleichzeitig ist das Verfahren verhältnismäßig einfach während der Druckprüfung durchzuführen und erfordert insbesondere keine speziellen Vorkehrungen am Druckbehälter.

Das Verfahren ist für alle Arten von Druckbehältern einsetzbar. Besonders eignet es sich für metallische Druckbehälter.

### Kurze Beschreibung der Zeichnungen

Nachfolgend wird die Erfindung beispielhaft anhand der beigefügten Figuren beschrieben, in denen
- Fig. 1: ein Beispiel für eine Vorrichtung zur Erfassung von Veränderungen oder Schädigungen an Druckbehältern während der Druckprüfung zeigt;
- Fig. 2: ein Beispiel für die Verschiebung des Frequenzspektrums während der Druckprüfung ist; und
- Fig. 3a und 3b: Beispiele für das Klangspektrum an einem rissfreien Druckbehälter (Fig. 3a) bzw. an einem rissbehafteten Druckbehälter (Fig. 3b) nach der Klangprüfung zeigen.

### Wege zur Ausführung der Erfindung

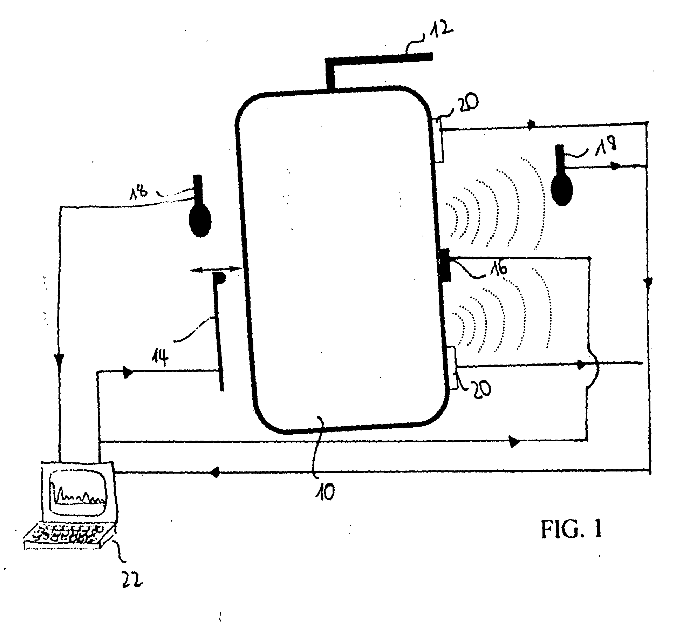

Fig. 1 zeigt einen Druckbehälter 10, der einer Druckprüfung zu unterwerfen ist. Der Druckbehälter kann während der Druckprüfung mittels der Zuleitung 12 mit Druck durch Einleiten eines unter Druck stehenden Fluids, z.B. einer Flüssigkeit, beaufschlagt werden. Die Druckbeaufschlagung kann derart sein, dass ein kontinuierlicher oder stufenweiser Druckanstieg oder -abfall mit oder ohne dazwischenliegendem kontinuierlichen Druck erfolgt, oder aber derart, dass eine gleichmäßige oder ungleichmäßige Folge von Druckanstiegen und -abfällen, ggf. nicht immer zurück auf Umgebungsdruck, erzeugt wird. Insbesondere wird die Druckprüfung meist derart durchgeführt, dass eine Phase ansteigenden Drucks bis zu einem Maximaldruck und eine sich unmittelbar anschließende Phase abfallenden Drucks, z.B. zurück auf Ausgangsdruck, vorhanden ist.

Zur Klangprüfung des Druckbehälters 10 während der Druckprüfung zum Erfassen von Veränderungen oder Schädigungen am Druckbehälter sind am Druckbehälter Schallerreger vorgesehen, z.B. ein Klöppel 14, mittels dessen, zum Beispiel mit einem einfachen Schlag oder mit einem Mehrfachschlag (z. B. Doppelschlag), d. h. durch zwei oder mehrere kurze, unmittelbar aufeinander folgende Anschläge, gegen den Prüfling ein Klang angeregt wird. Die Schallanregung wird zugeordnet zu dem ansteigenden Prüfdruck durchgeführt.

Als weitere Art von Schallerregern sind bei der Prüfanordnung in der dargestellten Ausführungsform Summer 16 vorgesehen. Alternativ kommen z. B. auch Vibrationseinrichtungen oder Auslöser für einen Magnetostriktionseffekt in Frage. Der Magnetostriktionseffekt kann dabei bei ferromagnetischen Material des Prüflings in diesem selbst angeregt werden oder aber durch magnetostriktiv angeregte Schwinger, z. B. Nickelschwinger, erzeugt und die Schwingung in den Prüfling eingeleitet werden. Je nach Bedarf können wie im dargestellten Beispiel mehrere gleiche oder verschiedene Schallerreger an einem Druckbehälter kombiniert werden, und an unterschiedlichen Orten am Druckbehälter angebracht sein. Es ist jedoch auch möglich, nur einen einzigen Schallerreger vorzusehen. Die Klanganregung am Druckbehälter 10 kann an jedem der Schallerreger in einem gleichmäßigen oder ungleichmäßigen zeitlichen Takt erfolgen und wird programmgesteuert vorgenommen. Insbesondere wird , die Klanganregung während des ansteigenden bzw. abfallenden Innendrucks des Prüflings, bevorzugterweise mit zunehmender oder abnehmender Taktfrequenz vorgenommen.

Die Klang- bzw. Schallanregung des Behälters muss nicht von außen her, wie in Fig. 1 dargestellt, erfolgen, sondern kann auch von innen her über das unter Druck stehende Fluid, vorzugsweise Wasser, erfolgen. Beispielsweise kann das Fluid in den Zuleitungen mit Schwingungen beaufschlagt werden, indem in oder an der Leitung oder sonstwo ein Schwingungserreger angebracht wird, um direkt Schwingungen in dem unter Druck stehenden Fluid in dem Behälter anzuregen.

Die Anordnung zur Erfassung von Veränderungen oder Schädigungen an Druckbehältern 10 während der Druckprüfung enthält ferner Schallaufnehmer, die dazu geeignet sind, den angeregten Schall über ein breites Spektrum zu erfassen und als Ausgangssignal an eine Auswerteeinrichtung (z. B. einen FFT-Analysator) weiterzuleiten. In der dargestellten Ausführungsform enthält die Anordnung zwei an verschiedenen Orten positionierte Luftmikrophone 18, die Luftschall aufnehmen, und zwei Körperschallmikrophone 20, die an unterschiedlichen Positionen direkt am Druckbehälter 10 angebracht sind und den Körperschall des Druckbehälters 10 erfassen. Ähnlich wie bei den Schallerregern ist es bei den Schallaufnehmern möglich, wahlweise ausschließlich Körperschallaufnehmer oder Luftschallaufnehmer oder Kombinationen von Körperschall- und Luftschallaufnehmern vorzusehen. Außerdem wird es bevorzugt, die Schallaufnehmer mehrfach vorzusehen, entweder mehrere Schallaufnehmer der gleichen Art oder mehrere Schallaufnehmer unterschiedlicher Arten, und die mehreren Schallaufnehmer an verschiedenen Orten am oder um den Druckbehälter 10 herum zu positionieren. Dabei ergibt sich als zusätzliches Kriterium der Unterschied der Spektren, die gleichzeitig an verschiedenen Orten aufgenommen werden.

Die Auswerteeinheit 22, an die das Ausgangssignal der Schallaufnehmer weitergegeben wird, enthält ein Speichermittel zur Speicherung des angeregten Klangspektrums und Verarbeitungsmittel, um das Klangspektrum nach vorgegebenen Kriterien auszuwerten. Außerdem enthält sie Mittel zum Darstellen der Ergebnisse der Analyse. Die Auswerteeinrichtung 22 kann gleichzeitig als Steuereinrichtung für die Schallerreger dienen, insbesondere auch eine beliebige programmgesteuerte Anregung versehen.

Bei der Überwachung des Druckbehälters 10 während seiner Druckprüfung wird mittels der Schallerreger bevorzugt an mehreren Orten am Druckbehälter eine Klanganregung vorgenommen und zwar derart, dass die Klanganregung sowohl vorzugsweise im ansteigenden Druck als auch während des abfallenden Drucks im Druckbehälters 10 erfolgt. Insbesondere wird es bevorzugt, zu zwei verschiedenen Zeitpunkten während der Druckprüfung, ggf. bei verschiedenen Drücken, die Anregung vorzunehmen und die Auswertung durch Vergleich der aus den verschiedenen Zeitpunkten angeregten Klangspektren durchzuführen. Der angeregte Klang wird anschließend als Körperschall und/oder Luftschall mittels der Schallaufnehmer aufgenommen. Wenn mehrere Orte zur Aufnahme des Schalls vorgesehen sind, kann der Schall an mehreren Orten gleichzeitig oder in Sequenz aufgenommen und nach Bedarf aufgezeichnet werden.

Anschließend wird das Klangspektrum des angeregten Klangs in der Auswerteeinheit 22 analysiert, wobei beispielsweise bei mehreren Aufzeichnungsorten die verschiedenen Schalllaufzeiten bzw. Laufzeitunterschiede berücksichtigt und bewertet werden, Dabei können Schallübertragungseinflüsse berücksichtigt werden. Dabei ergeben sich zusätzlich Möglichkeiten, über die Laufzeit eventuell auftretende Fehler zu lokalisieren.

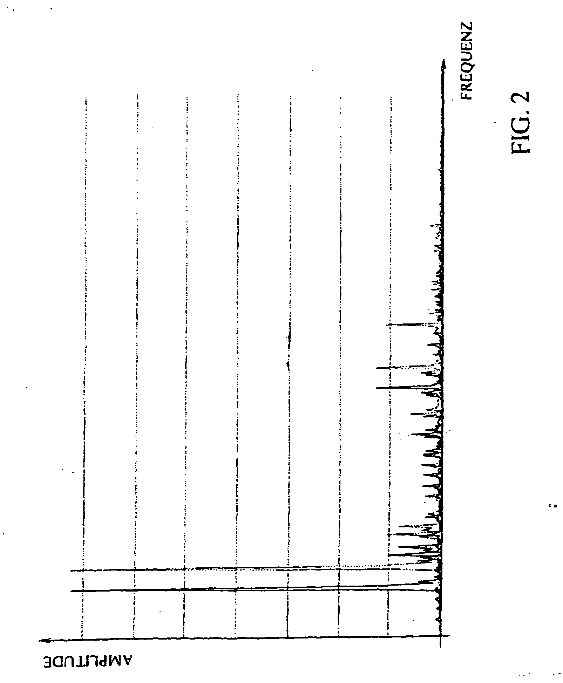

Zusätzlich oder alternativ können zwei zu verschiedenen Zeitpunkten während der Druckprüfung bei verschiedenen Drücken angeregte Klangspektren durch die Verschiebung des Klangspektrums bei zunehmenden Druck verglichen werden. In Fig. 2 zeigt eine die durchgezogene Linie das Frequenzspektrum nach einer Klanganregung während der Druckprüfung bei einem verhältnismäßig niedrigen ersten Druck im Druckbehälter 10. Das mit gestrichelter Linie dargestellte Frequenzspektrum zeigt das Frequenzspektrum des selben Behälters und bei gleichartiger Anregung bei einem höheren Druck im Inneren des Druckbehälters. Wie zu erkennen ist, verschiebt sich bei ansteigendem Druck entsprechend der Wirkung einer zunehmend gespannten Saite eines Instruments das Frequenzspektrum im Wesentlichen hin zu höheren Frequenzen mit verhältnismäßig geringen Änderungen seiner Form. Bei den dargestellten Spektren kann somit auf einen während der Druckprüfung unversehrt gebliebenen Behälter geschlossen werden.

Zusätzlich kann die Lage der einzelnen Frequenzen, die Höhe der Amplituden, die Form der Frequenzspitzen und/oder die Steilheit des Flankenanstiegs bzw. -abfalls berücksichtigt und ausgewertet werden, wobei vorzugsweise eine Auswertung von sowohl des während des ansteigenden Drucks als auch während des abfallenden Drucks aufgenommenen Klangspektrums, vorgenommen wird.

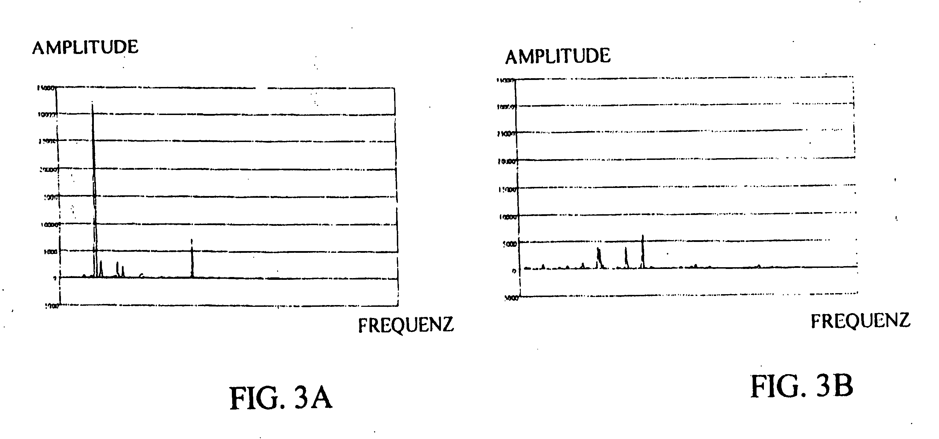

Fig. 3a zeigt ein Frequenzspektrum der Klangemission an einem Druckbehälter 10, der die Druckprüfung ohne Beeinträchtigung, d.h. rissfrei, beendet hat, während Fig. 3b das Frequenzspektrum des entsprechenden Druckbehälters zeigt, wobei jedoch Schädigungen während der Druckprüfung aufgetreten sind. Dies kann in Analogie zu der Prüfung von Produkten daraus geschlossen werden, dass Bauteile ohne Risse und Lockerungen ein vergleichsweise reines Spektrum mit einzelnen klaren Frequenzen liefern. Sind Risse oder Lockerungen vorhanden, so stellt sich ein Spektrum mit zahlreichen Frequenzen, jedoch in geringerer Höhe, ein (sog. Scheppern). Die Fig. 3b dagegen zeigt im Vergleich zu einem "reinen" Spektrum (Fig. 3a) ein Spektrum, wie es sich nach der Prüfung einstellt, wenn eine Fehlstelle, insbesondere ein Riss, erzeugt wurde. Durch Vergleich der Spektren vor und nach einer Druckprüfung lässt sich auf diese Weise erkennen, ob durch die Druckprüfung ein Fehler, insbesondere ein Riss, erzeugt wurde.

Durch die Klangprüfung, während der Druckprüfung eines Behälters ist es somit möglich, anhand kennzeichnender Kriterien Fehler, die durch die Druckprüfung entstehen, mit Hilfe eines verhältnismäßig einfachen und störungsunempfindlichen Verfahrens zu erkennen. Schäden im späteren Betrieb, die auf Risse, Verformungen und Ähnliches während der Druckprüfung zurückgehen, können somit verhindert werden. Außerdem kann die Prüfung zeitgleich zur Druckprüfung durchgeführt werden, so dass die Stillstands- bzw. Ausfallzeit des Behälters verkürzt wird.

## Patentansprüche

1. Verfahren zur Erfassung von Veränderungen an Druckbehältern während der Beaufschlagung der Behälter mit Druck bei ihrer Druckprüfung, enthaltend die Schritte:
Durchführen einer Klanganregung des Druckbehälters während der Druckbeaufschlagung des Druckbehälters bei der Druckprüfung; und
Auswerten des am Druckbehälter angeregten Klangspektrums;
**dadurch gekennzeichnet, dass** die Druckbeaufschlagung eine Phase ansteigenden Drucks und eine Phase abfallenden Drucks enthält und die Klanganregung während des ansteigenden und/oder abfallenden Drucks erfolgt.

2. Verfahren nach Anspruch 1, **dadurch gekennzeichnet, dass** die Klanganregung zu mindestens zwei unterschiedlichen Zeitpunkten während der Druckprüfung, vorzugsweise bei verschiedenen Innendrücken des Behälters, erfolgt, und
die Auswertung des Klangspektrums im Hinblick auf Unterschiede zwischen den zu verschiedenen Zeitpunkten angeregten Klangspektren erfolgt.

3. Verfahren nach einem der vorhergehenden Ansprüche, **dadurch gekennzeichnet, dass** die Klanganregung durch Anschlagen eines Klöppels, durch einen aufgesetzten Summer und/oder durch einen Magnetostriktionseffekt erfolgt.

4. Verfahren nach einem der vorhergehenden Ansprüche, **dadurch gekennzeichnet, dass** die Klanganregung an verschiedenen Positionen am Druckbehälter erfolgt.

5. Verfahren nach einem der vorhergehenden Ansprüche, **dadurch gekennzeichnet, dass** der angeregte Klang zur Auswertung als Luftschall und Körperschall aufgenommen wird.

6. Verfahren nach einem der vorhergehenden Ansprüche, **dadurch gekennzeichnet, dass** der Schall an mehreren Stellen zur Auswertung aufgenommen wird.

7. Verfahren nach einem der vorhergehenden Ansprüche, **dadurch gekennzeichnet, dass** bei der Auswertung des an verschiedenen Stellen am Druckbehälter angeregten und erfassten Klangspektrums die Schalllaufzeiten und/oder Laufzeitunterschiede des Schalls und/oder Schall-übertragungseinflüsse berücksichtigt werden.

8. Verfahren nach einem der vorhergehenden Ansprüche, **dadurch gekennzeichnet, dass** die Auswertung des Klangspektrums im Hinblick auf eine Verschiebung des Gesamtspektrums, die Lage einzelner Frequenzen, die Höhe der Amplituden, die Formen der Frequenzspitzen und/oder die Steilheit des Flankenanstiegs und/oder -abfalls erfolgt.

9. Vorrichtung zur Erfassung von Veränderungen oder Schädigungen an Druckbehältern (10) während ihrer Druckprüfung, enthaltend:
eine Einrichtung (14, 16) zum Erzeugen einer Klanganregung am Druckbehälter (10);
eine Einrichtung (18, 20) zum Erfassen des angeregten Klangspektrums; und
eine Auswerteeinrichtung (22) für das am Druckbehälter (10) angeregte Klangspektrum,
**dadurch gekennzeichnet, dass** die Einrichtung (14, 16) zum Erzeugen einer Klanganregung dazu angepasst ist, die Klanganregung während einer Druckbeaufschlagung des Druckbehälters bei der Druckprüfung in einer Phase ansteigenden und/oder abfallenden Drucks durch zuführen.

10. Vorrichtung nach einem der Anspruch 9, **dadurch gekennzeichnet, dass** die Einrichtung (14, 16) zum Erzeugen einer Klanganregung Mittel zur Klanganregung an mehreren Orten am Druckbehälter (10) enthält.

11. Vorrichtung nach einem der Ansprüche 9 oder 10, **dadurch gekennzeichnet, dass** die Einrichtung (18, 20) zum Erfassen des angeregten Klangspektrums Mittel zur Erfassung des Klangspektrums an mehreren Orten als Körperschall und/oder Luftschall enthält.

## Claims

1. A method for detecting changes in pressure vessels while pressurizing the vessels during a hydraulic pressure test, involving the following steps: inducing a tone on the pressure vessel while pressurizing the pressure vessel during the hydraulic pressure test; and evaluating the tonal spectrum induced on the pressure vessel, and
**characterized in that** pressurization involves one phase of rising pressure and one phase of falling pressure, and that tonal excitation takes place during the rising and/or falling pressure.

2. The method according to claim 1, **characterized in that** tones are induced at least at two different times during the hydraulic pressure test, preferably at different internal pressures of the vessel, and
that the tonal spectrum is evaluated relative to differences between the tonal spectra induced at different times.

3. The method according to claim 1, **characterized in that** the tones are induced by means of a clapper, a mounted buzzer and/or a magnetostriction effect.

4. The method according to claim 1, **characterized in that** tonal excitation takes place at various positions of the pressure vessel.

5. The method according to claim 1, **characterized in that** the induced tone is recorded for evaluation as airborne sound and structure-borne sound.

6. The method according to claim 1, **characterized in that** the sound is recorded at several points for evaluation.

7. The method according to claim 1, **characterized in that** the sound echo times and/or echo time differences of the sound and/or sound transmission influences are taken into account while evaluating the tonal spectrum induced and acquired at various points of the pressure vessel.

8. The method according to claim 1, **characterized in that** the tonal spectrum is evaluated relative to a shift in the overall spectrum, the position of individual frequencies, the height of the amplitudes, the shapes of the frequency peaks and/or the steepness of the flank rise and/or fall.

9. A device for detecting changes or damages to pressure vessels (10) while undergoing a hydraulic pressure test, encompassing:
a device (14, 16) for generating a tonal excitation on the pressure vessel (10);
a device (18, 20) for detecting the induced tonal spectrum; and
an evaluator (22) for the tonal spectrum induced on the pressure vessel (10);
**characterized in that** the device (14, 16) for generating a tonal excitation is adapted to generate tonal excitation during a phase of rising and/or falling pressure while pressurizing the pressure vessel during the hydraulic pressure test.

10. The device according to claim 9, **characterized in that** the device (18, 20) for generating a tonal excitation comprises means for inducing tones at several locations of the pressure vessel (10).

11. The device according to claims 9 or 10, **characterized in that** the device (18, 20) for detecting the induced tonal spectrum comprises means for determining the tonal spectrum at several locations as structure-borne sound and/or airborne sound.

## Revendications

1. Procédé d'acquisition de changements de récipients sous pression pendant la mise sous pression des récipients lors d'un essai de pression, contenant les étapes consistant à générer une stimulation sonore du récipient sous pression pendant la mise sous pression du récipient sous pression lors de l'essai de pression ; et à exploiter le spectre sonore stimulé sur le récipient sous pression, **caractérisé en ce que** la mise sous pression contient une phase de hausse de pression et une phase de baisse de pression et la stimulation sonore se fait pendant la hausse et/ou la baisse de pression.

2. Procédé selon la revendication 1, **caractérisé en ce que** la stimulation sonore se fait à au moins deux moments différents pendant l'essai de pression, de préférence à différentes pressions internes du récipient, et **en ce que** l'exploitation du spectre sonore se fait en tenant compte de différences entre les spectres sonores stimulés à différents moments.

3. Procédé selon l'une quelconque des revendications précédentes, **caractérisé en ce que** la stimulation sonore se fait en frappant un battant, à l'aide d'un vibreur sonore appliqué et/ou par un effet magnétostrictif.

4. Procédé selon l'une quelconque des revendications précédentes, **caractérisé en ce que** la stimulation sonore se fait dans différentes positions sur le récipient sous pression.

5. Procédé selon l'une quelconque des revendications précédentes, **caractérisé en ce que** le son stimulé est capté pour l'exploiter comme son aérien et son de structure.

6. Procédé selon l'une quelconque des revendications précédentes, **caractérisé en ce que** le son est capté en plusieurs endroits pour l'exploiter.

7. Procédé selon l'une quelconque des revendications précédentes, **caractérisé en ce que,** lors de l'exploitation du spectre sonore stimulé et acquis en différents endroits sur le récipient sous pression, on doit prendre en compte les temps de parcours du son et/ou les différences de temps de parcours du son et/ou les influences sur la transmission du son.

8. Procédé selon l'une quelconque des revendications précédentes, **caractérisé en ce que** l'exploitation du spectre sonore se fait en tenant compte d'un décalage de l'ensemble du spectre, de la situation des fréquences individuelles, de la hauteur des amplitudes, des formes des pics de fréquence et/ou de la déclivité de la croissance et/ou de la décroissance des impulsions.

9. Dispositif d'acquisition de changements ou de dégâts sur des récipients sous pression (10) lors de leur essai de pression, contenant :
un dispositif (14,16) pour produire une stimulation sonore sur le récipient sous pression (10) ;
un dispositif (18, 20) pour acquérir le spectre sonore stimulé ; et
un dispositif d'exploitation (22) pour le spectre sonore stimulé sur le récipient sous pression (10), **caractérisé en ce que** le dispositif (14, 16) pour produire une stimulation sonore est adapté pour réaliser la stimulation sonore pendant une mise sous sous pression du récipient sous pression lors de l'essai de pression dans une phase de hausse de pression et/ou de baisse de pression.

10. Dispositif selon la revendication 9, **caractérisé en ce que** le dispositif (14, 16) pour produire une stimulation sonore contient des moyens de stimulation sonore en plusieurs endroits sur le récipient sous pression (10).

11. Dispositif selon l'une quelconque des revendications 9 ou 10, **caractérisé en ce que** le dispositif (18,20) pour acquérir le spectre sonore stimulé contient des moyens pour l'acquisition du spectre sonore en plusieurs endroits en tant que son de structure et/ou son aérien.
